# EUROPÄISCHE PATENTANMELDUNG

(11) **EP 2 955 477 A1**
(43) Veröffentlichungstag der Anmeldung: **16.12.2015**
(21) Anmeldenummer: 15171544.8
(22) Anmeldetag: 10.06.2015
(51) Int. Cl.: G01B 5/06, G01B 3/24

(54) **VORRICHTUNG ZUR DICKENMESSUNG**

(30) Priorität: 11.06.2014 DE 102014108214
(71) Anmelder: ATN Hölzel GmbH, 02736 Oppach (DE)
(72) Erfinder:
(74) Vertreter: Weissfloh, Ingo

(57) **Zusammenfassung**

Aufgabe der Erfindung ist es, eine Vorrichtung zur Dickenmessung von Bauteilen zu schaffen, mittels derer sich Abweichungen in der Dicke der Bauteile zuverlässig und hochgenau ermitteln lassen und welche zudem einen einfachen Aufbau besitzt und eine einfache Messung ermöglicht.

Vorrichtung zur Dickenmessung mit einem zangenartigen Aufbau mit Messbacken (1, 2), wobei auf den Messbacken (1, 2) Tastspitzen (3) vorhanden sind und die Vorrichtung mittels eines pneumatischen, hydraulischen, elektrischen oder elektromechanischen Antriebes (4) antreibbar ist und der Abstand zwischen den Tastspitzen (3) mittels eines Messsensors (6) messbar ist,
**dadurch gekennzeichnet**,
dass zumindest die Messbacken (1, 2), der Antrieb (4) und der Messsensor (6) eine Messapparatur bilden und die Messbacken (1, 2) der Vorrichtung als feststehende Messbacke (1) und als schwenkbare Messbacke (2) ausgeführt sind, wobei die schwenkbare Messbacke (2) um eine die beiden Messbacken (1, 2) verbindende Schwenkachse (5) schwenkbar gelagert ist und dass die schwenkbare Messbacke (2) antreibbar und einstellbar ausgeführt ist und dass mit der schwenkbaren Messbacke (2) der Messsensor (6) mittelbar oder unmittelbar in Wirkverbindung/Verbindung/Wirkbeziehung steht.

Das Anwendungsgebiet der Erfindung liegt in der Qualitätskontrolle bei flächigen Bauteilen oder Baugruppen in automatisierten Produktionslinien.

## Beschreibung

Bei gefügten, ein, zwei oder mehrteilig Bauteilen oder Baugruppen besteht die Notwendigkeit die korrekte Lage und die zu erwartende Genauigkeit insbesondere der Dicke des Bauteils zu ermitteln. Dies lässt mittels Sensoren und Messzangen realisieren, wobei bei den Sensoren feste Bezugspunkte notwendig sind.

Bekannt sind Messzangen, bei welchen beide Schenkel drehbar ausgeführt sind. So beschreibt die DD 242 471 A1 eine Vorrichtung zur mechanischen Wanddickenmessung für dünnwandige Werkstücke. Die Vorrichtung ist aus zwei Tastarmen zangenförmig ausgebildet, welche um eine gestellfeste Achse drehbar gelagert sind, so dass auf der den Griffen einer Zange entsprechenden Seite der Tastarme eine Zugfeder angeordnet ist und sich der Messwertaufnehmer auf dieser gleichen Seite der Tastarme befindet.

Die DE 196 42 768 C1 eine Vorrichtung zur zerstörungsfreien Messung von Schichtdicken, insbesondere von Siegelnähten von versiegelten Behältern, wobei ein Messzange offenbart wird, an deren Schenkeln Messelektroden befestigt sind und dass eine Betätigungseinrichtung zum Öffnen und Schließen der Messzange vorhanden ist. Die Schenkel der Messzange sind ortsfest in der Vorrichtung auf unterschiedlichen Achsen drehbar gelagert.

Aufgabe der Erfindung ist es, eine Vorrichtung zur Dickenmessung von Bauteilen zu schaffen, mittels derer sich Abweichungen in der Dicke des Bauteils zuverlässig und hochgenau ermitteln lassen und welche zudem einen einfachen Aufbau besitzt und eine einfache Messung ermöglicht.

Mit der Erfindung wird im angegebenen Anwendungsfall erreicht, dass eine Vorrichtung zur Dickenmessung mit einem zangenartigen Aufbau mit Messbacken geschaffen wird, wobei auf den Messbacken Tastspitzen vorhanden sind und die Vorrichtung mittels eines pneumatischen, hydraulischen, elektrischen oder elektromechanischen Antriebes antreibbar ist und der Abstand zwischen den Tastspitzen mittels eines Messsensors messbar ist und zumindest die Messbacken, der Antrieb und der Messsensor eine Messapparatur bilden, wobei die Messbacken der Vorrichtung als feststehende Messbacke und als schwenkbare Messbacke ausgeführt sind, wobei die schwenkbare Messbacke um eine die beiden Messbacken verbindende Schwenkachse schwenkbar gelagert ist und dass die schwenkbare Messbacke antreibbar und einstellbar ausgeführt ist und dass mit der schwenkbaren Messbacke der Messsensor mittelbar oder unmittelbar in Wirkverbindung/Verbindung/Wirkbeziehung steht. Mittels dieser Vorrichtung wird ein einfacher Aufbau erreicht, welche zudem hochgenaue Messungen ermöglicht.

Vorteilhafte Ausgestaltungen der Vorrichtung sind in den Ansprüchen 2 bis 10 dargestellt.

Vorteilhaft umfasst die schwenkbare Messbacke einen Messbackenabschnitt mit den Tastspitzen und einen Hilfsschenkelabschnitt, wobei der Hilfsschenkelabschnitt im Bereich der Schwenkachse am Messbackenabschnitt geradlinig oder abgewinkelt verlängert oder weitergeführt vom Messbackenabschnitt weggeführt ist. Hierdurch ergibt sich eine Vereinfachung der Anordnung und genauere Messanordnung, wodurch sich Messfehler vermeiden lassen.

Vorteilhaft besitzt der Hilfsschenkelabschnitt die gleiche Länge wie der Messbackenabschnitt besitzt. Hierdurch ergibt sich eine Verbesserung der Anordnung und der Erfassung der Messergebnisse, welche es zudem erlaubt, dass der Messpunkt und die Tastköpfe im jeweils im gleichen Abstand zur Schwenkachse angeordnet sind und somit die Messwerte direkt erfasst werden können und aufwändige Umrechnungen und Auswertungen vermieden werden können.

Vorteilhaft ist die Messapparatur, zumindest umfassend die Messbacken, den Antrieb und den Messsensor über eine Niveauregulierung mit einer Haltevorrichtung verbunden. Damit wird eine konstruktive Verbesserung erreicht, welche die Flexibilität und die Messgenauigkeit erhöht. Durch eine Führung ist die Messapparatur, umfassend die Messbacken, den Antrieb und den Messsensor schwimmend gelagert und wird in einer Mittellage gehalten. Durch diese Freiheitsgrade wird beim Schließen der Vorrichtung, also beim Anlegen der Tastspitzen an das Bauteil, die Messapparatur nach unten oder nach oben geschoben, wodurch somit die Messapparatur ohne zusätzliche aktive Stellglieder zum Höhenniveau des Bauteils ausgeglichen und damit sichergestellt wird, dass beide Tastspitzen am Bauteil anliegen. Zudem lassen sich Bauteiltoleranzen zuverlässig ausgleichen.

Weiterhin ist der Antrieb an der feststehenden Messbacke angeordnet, wodurch je nach Notwendigkeit ein kompakter sowie einfacher Aufbau ermöglicht wird, welcher zudem einen genauen Antrieb der Vorrichtung ermöglicht.

Vorteilhaft ist der Messsensor als Wegesensor ausgebildet. Hierdurch werden jegliche Bewegungen der Messbacke erfasst und lassen sich direkt oder durch Anwendung einfacher geometrischer Regeln auswerten.

Vorteilhaft ist der Messsensor an der feststehenden Messbacke angeordnet und steht mit dem Messbackenabschnitt der schwenkbaren Messbacke in Verbindung/Wirkbeziehung. Hierdurch wird ein einfacher Aufbau erreicht.

Vorteilhaft ist der Messsensor am Antrieb oder im Bereich des Antriebes angeordnet und steht mit dem Hilfsschenkelabschnitt der schwenkbaren Messbacke in Verbindung/Wirkbeziehung. Hierdurch wird ein einfacher Aufbau erreicht, welcher zudem eine genaue Messung ermöglicht. Weiterhin ergibt sich die Möglichkeit einer direkten Rückkopplung der Ansteuerung des Antriebes auf die tatsächliche Bewegung der schwenkbaren Messbacke.

Vorteilhaft sind die Tastspitzen und der Messsensor, der mit dem Hilfsschenkelabschnitt in Verbindung/Wirkbeziehung steht, jeweils im gleichen Abstand zur Schwenkachse angeordnet, wodurch sich die Erfassung der Messergebnisse vereinfacht, da die Messergebnisse direkt erfasst und zusätzliche Umrechnungen und damit Fehler vermieden werden können.

Mehrere Ausführungsbeispiele der Erfindung sind in den Zeichnungen dargestellt und werden im Folgenden näher beschrieben. Es zeigen:
Fig. 1 bis 4 eine Vorrichtung zur Dickenmessung mit an den Messbacken angeordnetem Messsensor in verschiedenen Ansichten,
Fig. 5 und 6 eine Vorrichtung zur Dickenmessung mit am Antrieb angeordnetem Messsensor in verschiedenen Ansichten,
Fig. 7 eine Vorrichtung zur Dickenmessung mit an den Messbacken angeordnetem Messsensor und mit quer zu den Messbacken angeordnetem Antrieb,
Fig. 8 eine Vorrichtung zur Dickenmessung in Vorderansicht und
Fig. 9 eine Messapparatur mit Niveauregulierung und Haltevorrichtung.

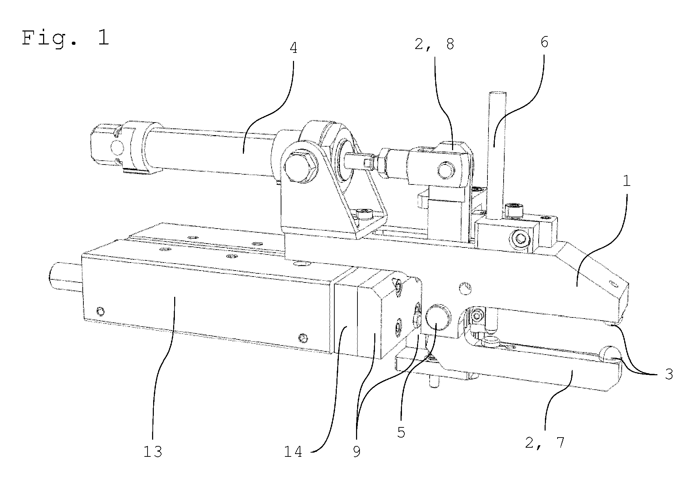

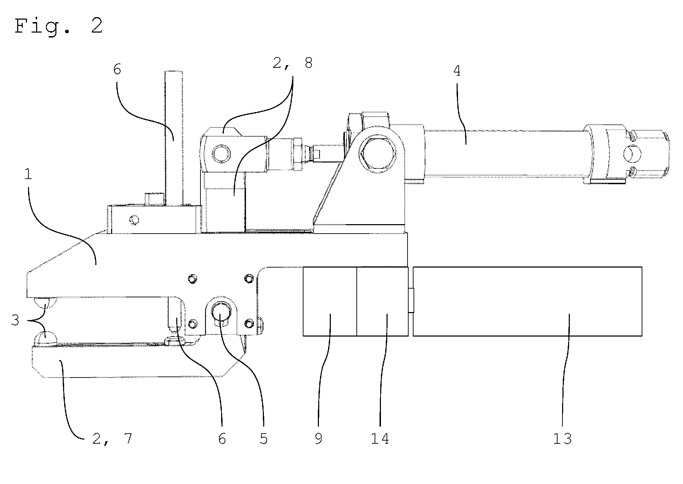

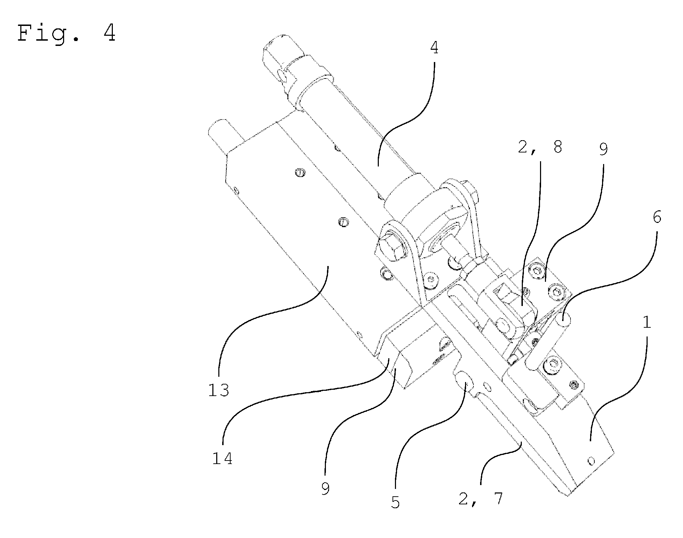

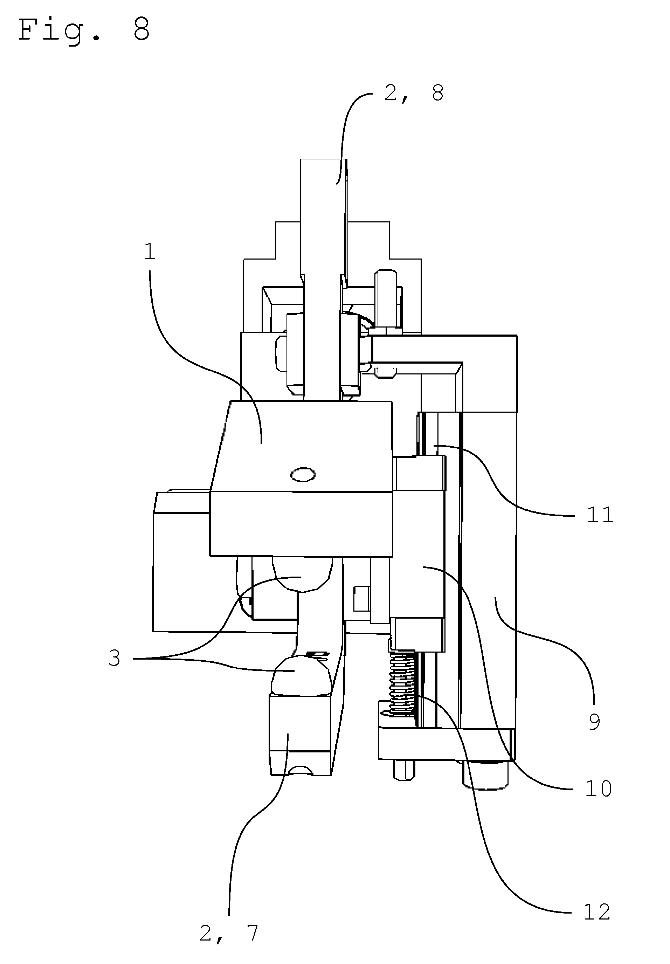

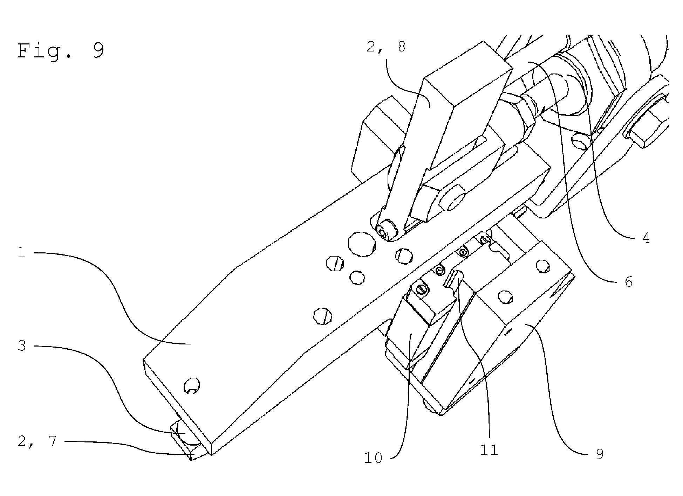

Die erfindungsgemäße Vorrichtung zur Dickenmessung besitzt einen zangenartigen Aufbau mit Messbacken 1, 2. Auf den Messbacken 1, 2 sind, jeweils in Greif- oder Messrichtung fluchtend, Tastspitzen 3 vorhanden. Die Vorrichtung lässt sich mittels eines pneumatischen, hydraulischen, elektrischen oder elektromechanischen Antriebes 4 antreiben. Der Abstand zwischen den Tastspitzen 3 ist mittels eines Messsensors 6 messbar. Dabei sind die Messbacken 1, 2 der Vorrichtung als feststehende Messbacke 1 und als schwenkbare Messbacke 2 ausgeführt. Hierbei ist die schwenkbare Messbacke 2 um eine die beiden Messbacken 1, 2 verbindende Schwenkachse 5 schwenkbar gelagert, wobei die schwenkbare Messbacke 2 in einem konkreten Ausführungsbeispiel mittels eines Pneumatikzylinders antreibbar und einstellbar ausgeführt ist. Der Messsensor 6 steht mit der schwenkbaren Messbacke 2 mittelbar dergestalt in Wirkverbindung bzw. Wirkbeziehung, dass in einem konkreten Ausführungsbeispiel der Abstand von der schwenkbaren Messbacke 2 zum Messsensor 6 mittels an sich bekannter kontaktfreier Messung ermittelt wird. Der Messsensor 6 ist wie in den Figuren 1 bis 4 dargestellt, an der feststehenden Messbacke 1 in Richtung des Messbackenabschnitts 7 der schwenkbaren Messbacke 2 angeordnet. Die Messapparatur, zumindest umfassend die Messbacken 1, 2 mit Schwenkachse 5, den Antrieb 4 und den Messsensor 6 ist, wie in den Figuren 1, 3 bis 5, 8 und 9, dargestellt, sowohl über eine Niveauregulierung 10 mit einer Haltevorrichtung 9 oder aber, wie in den Figuren 2, 6 und 7 dargestellt, direkt über die feststehenden Messbacke 1 mit der Haltevorrichtung 9 verbunden. Die Haltvorrichtung 9 ist, wie besonders in den Figur 2, 3 und 5 dargestellt, an der beweglichen Komponente 14 eines Linearantriebes 13, beispielsweise eines Pneumatikantriebs, angeordnet, womit die Messapparatur beispielsweise aus einer Parkposition in eine Messposition verschiebbar ausgeführt ist.

An der feststehenden Messbacke 1 ist der Antrieb 4, wie beispielsweise der Pneumatikzylinder, angeordnet und wirkt auf die schwenkbare Messbacke 2. Der Antrieb 4 ist hierbei annähernd parallel zur Ausrichtung der Messbacken 1, 2 angeordnet.

Bei einem konkreten Ausführungsbeispiel umfasst die schwenkbare Messbacke 2 einen Messbackenabschnitt 7 mit der Tastspitze 3 und einen Hilfsschenkelabschnitt 8, wobei der Hilfsschenkelabschnitt 8 im Bereich der Schwenkachse 5 vom Messbackenabschnitt 7 abgewinkelt weitergeführt ist. Dieser Hilfsschenkelabschnitt 8 ist, wie in den Figuren 1 bis 6, 8 und 9 dargestellt, rechtwinklig zum Messbackenabschnitt 7 weitergeführt. Mit diesem Hilfsschenkelabschnitt 8 ist, wie in den Figuren 1 bis 4 dargestellt, am von der Schwenkachse 5 entfernten Ende der Antrieb 4 verbunden. Mittels der Anordnung wirkt der vom Antrieb zurückgelegte Weg unmittelbar an der Messbacke 2. Der Antrieb wirkt rechtwinklig auf den Hilfsschenkelabschnitt 8, wobei durch die Schwenkbewegung des Hilfsschenkelabschnittes 8 und des Messbackenabschnittes 7 von diesem Winkel abgewichen wird. Aus diesem Grunde ist die Verbindung zwischen Antrieb 4 und Hilfsschenkelabschnitt 8 drehbeweglich ausgeführt.

Denkbar ist eine Ausführung, bei welcher jenseits der Schwenkachse 5 der Hilfsschenkelabschnitt 8 geradlinig weitergeführt ist. Der Antrieb 4 würde, in diesem Fall um 90 Grad verdreht angeordnet, ebenfalls rechtwinklig auf den Hilfsschenkelabschnitt 8 wirken, wobei auch hier durch die Schwenkbewegung des Hilfsschenkelabschnittes 8 und des Messbackenabschnittes 7 von dieser Winkelangabe abgewichen wird.

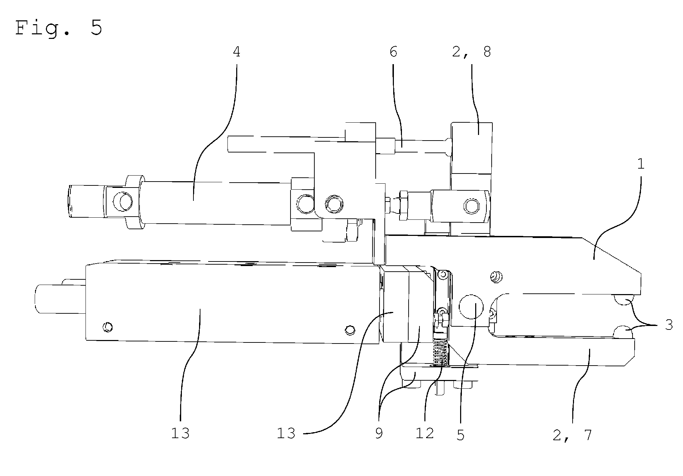

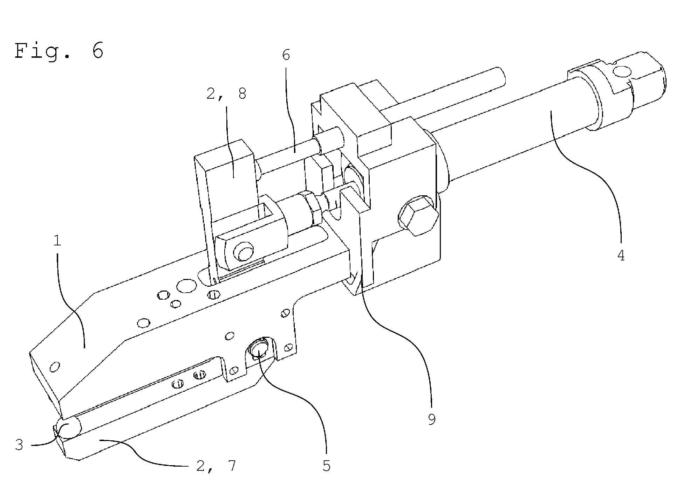

Bei einem weiteren Ausführungsbeispiel ist, wie in den Figuren 5 und 6 dargestellt, der Antrieb 4 vom Ende des Hilfsschenkelabschnittes 8 in Richtung der Schwenkachse 5 verschoben angeordnet. Der Hilfsschenkelabschnitt 8 ist annähernd rechtwinklig zum Messbackenabschnitt 7 ausgeführt. Der Hilfsschenkelabschnitt 8 besitzt annähernd die gleiche Länge wie der Messbackenabschnitt 7. Am Antrieb 4 und zu dessen Wirkrichtung parallel ist zudem der Messsensor 6 angeordnet, welcher als Wegesensor ausgeführt ist. Der Messsensor 6 ist mit dem Hilfsschenkelabschnitt 8 verbunden, wobei der Abstand dieses Verbindungspunktes zur Schwenkachse 5 jener Entfernung entspricht, welche die Tastspitzen 3 zur Schwenkachse besitzen. Somit wird erreicht, dass die jeweils zurückgelegten und gemessenen Wege identisch sind und aufwändige Umrechnungen oder Umwertungen entfallen können.

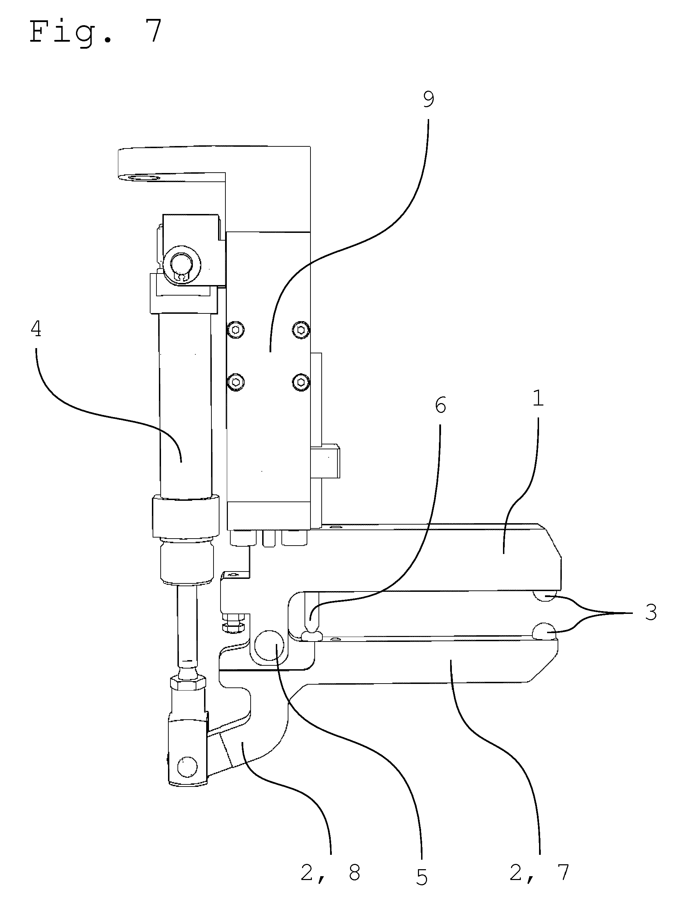

Figur 7 zeigt eine weitere Ausführungsform der Vorrichtung zur Dickenmessung. Während bei den bisher dargestellten Ausführungsformen der Antrieb 4 an der in annähernd gerader Richtung jenseits der Schwenkachse 5 verlängerten feststehende Messbacke 1 angeordnet ist, ist die feststehende Messbacke 1 im Bereich jenseits der Schwenkachse 5 annähernd rechtwinklig ausgeführt. An der schwenkbaren Messbacke 2 ist im Bereich der Schwenkachse 5 winklig bzw. abgewinkelt zum Messbackenabschnitt 7 der schwenkbaren Messbacke 2 der Hilfsschenkelabschnitt 8 angeordnet. Der Antrieb 4, ein Pneumatikzylinder, ist zumindest annähernd rechtwinklig zu den Messbacken 1, 2 und damit annähernd parallel zur Haltvorrichtung 9 und an dieser angeordnet und mit dem Hilfsschenkelabschnitt 8 verbunden. Der Messsensor 6 ist an der feststehenden Messbacke 1 angeordnet und steht mit dem Messbackenabschnitt 7 der schwenkbaren Messbacke 2 in Wirkverbindung.

Wie in den Figuren 1, 3 bis 5, 8 und 9 dargestellt, ist die Messapparatur, umfassend die Messbacken 1, 2, den Antrieb 4 und den Messsensor 6, über eine Niveauregulierung 10 an der Haltevorrichtung 9 angeordnet. Die Niveauregulierung 10 ist beispielsweise eine Profilschienenführung 11, welche in aufrechter Richtung quer zur Ausrichtung der Messbacken 1, 2 angeordnet ist und eine schwimmende Lagerung ermöglicht und durch beispielsweise eine Druckfeder 12 in Form einer Spiralfeder in Mittellage gebracht wird. Hierfür ist im unteren Bereich der Niveauregulierung 10 die Druckfeder 12 auf einem Führungsstab angeordnet, welche unter leichtem Druck zusammendrückbar ist. Für die Korrekturbewegung nach oben wird die Schwerkraft der Messapparatur überwunden und die Messapparatur nach oben auf der Profilschienenführung 11 geschoben. Damit wird sichergestellt, dass beim Schließen der Zange, also dem Anlegen der Tastspitzen 3 an das Bauteil, die Messapparatur sowohl nach unten als auch nach oben geschoben werden kann, um ohne zusätzliche, aktive Stellglieder das Höhenniveau des Bauteils ausgeglichen und damit sichergestellt werden kann, dass beide Tastspitzen 3 am Bauteil anliegen. Zudem lassen sich damit auftretende Bauteiltoleranzen ausgleichen.

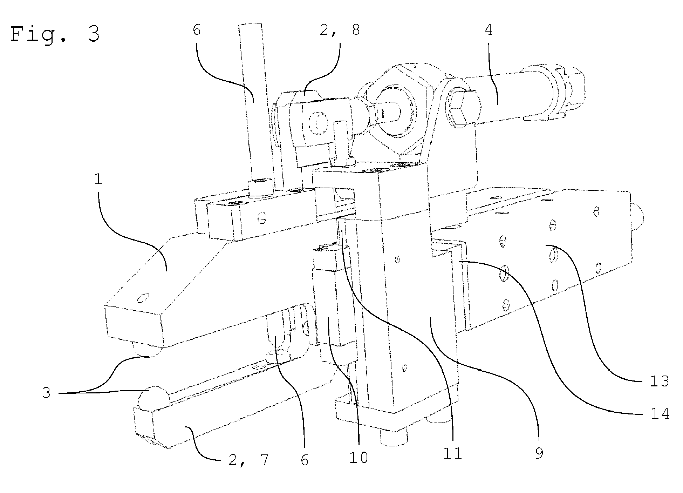

Wie in den Figuren 3, 8 und 9 dargestellt, ist die feststehende Messbacke 1 an der Niveauregulierung 10 der Haltevorrichtung 9 angeordnet.

In einer nicht dargestellten Ausführung ist der Antrieb 4 an der feststehenden Messbacke 1 angeordnet und mit dem Messbackenabschnitt 7 der schwenkbaren Messbacke 2 verbunden.

### Zusammenstellung der Bezugszeichen

- 1: - feststehende Messbacke
- 2: - schwenkbare Messbacke
- 3: - Tastspitze
- 4: - Antrieb
- 5: - Schwenkachse
- 6: - Messsensor
- 7: - Messbackenabschnitt
- 8: - Hilfsschenkelabschnitt
- 9: - Haltevorrichtung
- 10: - Niveauregulierung
- 11: - Profilschienenführung
- 12: - Druckfeder
- 13: - Linearantrieb
- 14: - bewegliche Komponente

## Patentansprüche

1. Vorrichtung zur Dickenmessung mit einem zangenartigen Aufbau mit Messbacken (1, 2), wobei auf den Messbacken (1, 2) Tastspitzen (3) vorhanden sind und die Vorrichtung mittels eines pneumatischen, hydraulischen, elektrischen oder elektromechanischen Antriebes (4) antreibbar ist und der Abstand zwischen den Tastspitzen (3) mittels eines Messsensors (6) messbar ist,
**dadurch gekennzeichnet,**
**dass** zumindest die Messbacken (1, 2), der Antrieb (4) und der Messsensor (6) eine Messapparatur bilden und die Messbacken (1, 2) der Vorrichtung als feststehende Messbacke (1) und als schwenkbare Messbacke (2) ausgeführt sind, wobei die schwenkbare Messbacke (2) um eine die beiden Messbacken (1, 2) verbindende Schwenkachse (5) schwenkbar gelagert ist und dass die schwenkbare Messbacke (2) antreibbar und einstellbar ausgeführt ist und dass mit der schwenkbaren Messbacke (2) der Messsensor (6) mittelbar oder unmittelbar in Wirkverbindung steht.

2. Vorrichtung nach Anspruch 1,
**dadurch gekennzeichnet,**
**dass** die schwenkbare Messbacke (2) einen Messbackenabschnitt (7) mit der Tastspitze (3) und einen Hilfsschenkelabschnitt (8) umfasst, wobei der Hilfsschenkelabschnitt (8) im Bereich der Schwenkachse (5) vom Messbackenabschnitt (7) geradlinig oder abgewinkelt wegführend verlängert oder weitergeführt ist.

3. Vorrichtung nach Anspruch 2,
**dadurch gekennzeichnet,**
**dass** der Hilfsschenkelabschnitt (8) die gleiche Länge wie der Messbackenabschnitt (7) besitzt.

4. Vorrichtung nach einem der Ansprüche 1 bis 3, **dadurch gekennzeichnet,**
**dass** die Messapparatur über eine Niveauregulierung (10) mit einer Haltevorrichtung (9) verbunden ist.

5. Vorrichtung nach einem der vorhergehenden Ansprüche, **dadurch gekennzeichnet,**
**dass** die feststehende Messbacke (1) an der Niveauregulierung (10) der Haltevorrichtung (9) oder direkt an der Haltevorrichtung (9) angeordnet ist.

6. Vorrichtung nach einem der vorhergehenden Ansprüche, **dadurch gekennzeichnet,**
**dass** der Antrieb (4) an der feststehenden Messbacke (1) angeordnet ist und mit der schwenkbaren Messbacke (2) oder mit dem Hilfsschenkelabschnitt (8) der schwenkbaren Messbacke (2) verbunden ist.

7. Vorrichtung nach einem der vorhergehenden Ansprüche, **dadurch gekennzeichnet,**
**dass** der Messsensor (6) als Wegesensor ausgebildet ist.

8. Vorrichtung nach einem der vorhergehenden Ansprüche, **dadurch gekennzeichnet,**
**dass** der Messsensor (6) an der feststehenden Messbacke (1) angeordnet ist und mit dem Messbackenabschnitt (7) der schwenkbaren Messbacke (2) in Verbindung/Wirkbeziehung steht.

9. Vorrichtung nach einem der vorhergehenden Ansprüche 1, **dadurch gekennzeichnet,**
**dass** der Messsensor (6) am Antrieb (4) angeordnet ist und mit dem Hilfsschenkelabschnitt (8) der schwenkbaren Messbacke (2) in Verbindung/Wirkbeziehung steht.

10. Vorrichtung nach einem der vorhergehenden Ansprüche 1 bis 7 und 9,
**dadurch gekennzeichnet,**
**dass** die Tastspitzen (3) und der Messsensor (6), der mit dem Hilfsschenkelabschnitt (8) in Verbindung/Wirkbeziehung steht, jeweils den gleichen Abstand zur Schwenkachse (5) besitzen.
